# EUROPEAN PATENT SPECIFICATION

(11) **EP 0 566 210 B1**
(45) Date of publication and mention of the grant of the patent: **29.01.1997**
(21) Application number: 93201099.4
(22) Date of filing: 14.04.1993
(51) Int. Cl.: F16K 5/06, F16K 31/04

(54) **Valve**
Hahn
Robinet

(30) Priority: 16.04.1992 NL 9200705
(43) Date of publication of application: 20.10.1993
(73) Proprietor: ECONOSTO N.V., NL-2908 LT Capelle a/d Ijssel (NL)
(72) Inventor: Tolsma, Pieter Jarig Sjoerd, NL-2716 LM Zoetermeer (NL)
(74) Representative: de Bruijn, Leendert C.

(56) References cited:
- GB-A- 958 832
- US-A- 3 785 613
- US-A- 4 320 777
- US-A- 4 596 377
- US-A- 4 957 274

## Description

The invention relates to a valve, comprising a valve housing containing a valve body, which valve body is rotatable by means of a valve stem which is guided through the housing to the outside in a sealing manner, and which valve also comprises a supporting base provided externally on the valve housing, on which base a control unit for rotating the valve stem can be fixed, which supporting base forms a closed chamber, on the outside of which the valve stem can be controlled.

Such a valve is known from US-A-4,320,777. In this valve a possible leakage along the seal at the position where the stem passes through the valve housing, is initially retained within the supporting base. Nevertheless, after prolonged periods of service with a leak, the risk of contaminating the environment still exists.

The object of the invention is to provide a valve which eliminates this risk. This object is achieved in that the generic valve is provided with a pressure sensor for measuring the pressure in the chamber.

In the valve according to the invention, a leakage can be detected early. Depending on the risk involved, a decision may be taken to replace the valve, or to leave the valve in place.

For constructional reasons, the supporting base has a wall which is made integral with the valve housing and runs all the way round the valve stem, which wall is shut off by a cover at the side facing away from the valve housing. Said wall can be made integral with the valve housing, while the separate cover still permits simple assembly.

The wall is preferably at least partially cylindrical on the inside, and the cover is correspondingly cylindrical on the outside, in such a way that the cover fits into the cylindrical part so that it seals. According to a first possibility, the valve stem can now be guided through the cover to the outside in such a way that it seals.

However, the preferred embodiment is one in which the valve stem is fixed to the cover, at its side facing away from the valve housing the cover has coupling means by which it can be coupled to the control unit, and on its periphery bears a sealing ring, in such a way that on rotation of the cover the valve is rotated correspondingly, while the seal between cover and wall is retained.

In a simple, sturdy embodiment, the valve stem has a stop face which faces away from the valve housing and on which the cover can be supported.

According to a practical embodiment, the chamber wall is provided with an opening which is shut off by means of a connecting nipple for the pressure sensor.

The invention will be explained in greater detail below with reference to an example of an embodiment shown in the figures.

Figure 1 shows a partially cut-away view of the valve in perspective.

Figure 2 shows a cross-section through the valve.

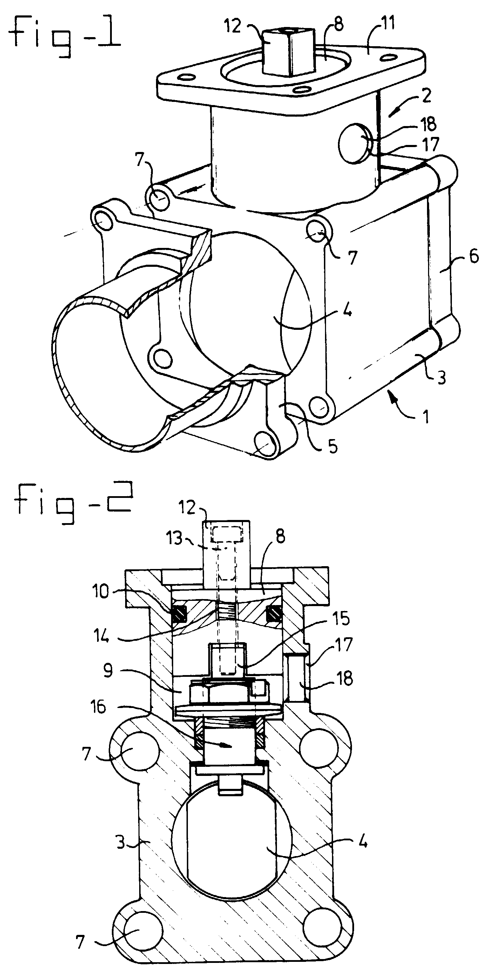

The valve shown in Figure 1 has a housing indicated in its entirety by 1, on which the supporting base 2 is fitted. The housing 1 comprises a central part 3 in which the valve body 4 is accommodated, in addition to two connecting parts 5, 6. For the sake of clarity, connecting part 5 is shown by dashed lines. The parts 3, 5 and 6 are fixed tightly to each other by means of bolts (not shown) which are inserted into the holes 7.

The supporting base 2 is shut off at the top by means of a cover 8, in such a way that a tight chamber 9 is formed. As can be seen more clearly in Figure 2, the cover 8 has a sealing ring 10 on its periphery. Since the cover and the supporting base are cylindrical on the outside and on the inside, respectively, cover 8 can be rotated, while the tightness of the chamber 9 can still be maintained by means of sealing ring 10.

At its side facing away from the valve housing 1, the supporting base 2 has a flange 11, on which a control device (not shown in any further detail) for the valve can be fitted. This control device can be coupled to branch connection 12, which is integral with the cover 8. Branch connection 12 has a through hole 13, through which a fixing bolt 14 runs. This fixing bolt 14 is screwed into the head 15, which in turn is fixed to valve stem 16. Head 15 and valve stem 16 can also be made integral. Cover 8 is firmly pressed onto the head 15 by tightening the bolt 14. As a result, the valve body 4 will turn corresponding to the rotations made by said branch connection 12.

The supporting base has a hole 17 in which a pressure sensor 18 is fitted. As soon as leakage occurs in the seal between valve stem 16 and valve housing 1, the pressure rises in chamber 9, and the pressure sensor emits a warning signal.

## Claims

1. Valve, comprising a valve housing (1) containing a valve body (4), which valve body (4) is rotatable by means of a valve stem (16) which is guided through the housing (1) to the outside in a sealing manner, and which valve also comprises a supporting base (2) provided externally on the valve housing (1), on which base (2) a control unit for rotating the valve stem (16) can be fixed, which supporting base (2) forms a closed chamber (9), on the outside of which the valve stem (16) can be controlled, characterized in that a pressure sensor (18) for measuring the pressure in the chamber (9) is provided.

2. Valve according to claim 1, in which the supporting base has a wall which is made integral with the valve housing (1) and runs all the way round the valve stem (16), which wall is shut off by a cover (8) at the side facing away from the valve housing (1).

3. Valve according to claim 2, in which the wall is at least partially cylindrical on the inside, and the cover (8) is correspondingly cylindrical on the outside, in such a way that the cover (8) fits into the cylindrical part so that it seals.

4. Valve according to claim 3, in which the valve stem (16) is fixed to the cover (8), at its side facing away from the valve housing (1) the cover (8) has coupling means (12) by which it can be coupled to the control unit, and on its periphery bears a sealing ring (10), in such a way that on rotation of the cover (8) the valve body (4) is rotated correspondingly, while the seal between cover and wall is retained.

5. Valve according to claim 4, in which the valve stem (16) has a stop face which faces away from the valve housing (1) and on which the cover (8) can be supported.

6. Valve according to claim 5, in which an internally threaded hole opens out int the stop face, into which hole a bolt (14) is screwed, resting with its head on the side of the cover (8) facing away from the valve housing (1).

7. Valve according to claim 6, in which the chamber wall is provided with an opening (17) which is shut off by means of a connecting nipple for the pressure sensor.

## Patentansprüche

1. Ventil, umfassend ein Ventilgehäuse (1), das einen Ventilkörper (4) enthält, welcher Ventilkörper (4) mittels eines Ventilschafts (16) drehbar ist, der unter Abdichtung durch das Gehäuse (1) zur Außenseite geführt ist, und welches Ventil auch eine an der Außenseite des Ventilgehäuses (1) vorgesehene Trag- oder Lagerbasis (2) aufweist, an welcher Basis (2) eine Steuereinheit zum Drehen des Ventilschafts (16) befestigbar ist, wobei die Trag- oder Lagerbasis (2) eine geschlossene Kammer (9) bildet, an deren Außenseite der Ventilschaft (16) gesteuert bzw. kontrolliert werden kann,
dadurch gekennzeichnet, daß
ein Drucksensor (18) zum Messen des Drucks in der Kammer (9) vorgesehen ist.

2. Ventil nach Anspruch 1, wobei die Trag- oder Lagerbasis eine Wand aufweist, die mit dem Ventilgehäuse (1) materialeinheitlich geformt ist und vollständig um den Ventilschaft (16) herum verläuft, welche Wand an der vom Ventilgehäuse (1) abgewandten Seite durch einen Deckel (8) verschlossen ist.

3. Ventil nach Anspruch 2, wobei die Wand an der Innenseite zumindest teilweise zylindrisch und der Deckel (8) an der Außenseite entsprechend zylindrisch sind, derart, daß der Deckel (8) so in das zylindrische Teil eingepaßt ist, daß er abdichtet.

4. Ventil nach Anspruch 3, wobei der Ventilschaft (16) am Deckel (8) befestigt ist, der Deckel (8) an seiner vom Ventilgehäuse (1) abgewandten Seite ein Kupplungs- oder Anschlußmittel (12), mit dessen Hilfe er mit der Steuereinheit koppelbar ist, aufweist und an seinem Umfang einen Dichtring (10) trägt, derart, daß bei Drehung des Deckels (8) der Ventilkörper (4) entsprechend gedreht wird, während die Abdichtung zwischen Deckel und Wand erhalten bleibt.

5. Ventil nach Anspruch 4, wobei der Ventilschaft (16) eine Anschlagfläche aufweist, die vom Ventilgehäuse (1) hinweg weist und auf welcher der Deckel (8) abgestützt sein kann.

6. Ventil nach Anspruch 5, wobei in die Anschlagfläche eine Innengewindebohrung mündet, in die ein Schraubbolzen (14) eingeschraubt ist, der mit seinem Kopf an der vom Ventilgehäuse (1) abgewandten Seite des Deckels (8) aufliegt.

7. Ventil nach Anspruch 6, wobei die Kammerwand mit einer Bohrung (17) versehen ist, die mittels eines Anschlußstutzens für den Drucksensor verschlossen ist.

## Revendications

1. Vanne, comprenant un logement de vanne (1) contenant un corps de vanne (4), lequel corps de vanne (4) peut tourner au moyen d'une tige de vanne (16) qui est guidée à travers le logement (1) à l'extérieur de manière étanche, et laquelle vanne comprend également une embase de support (2) prévue extérieurement sur le logement de vanne (1), sur laquelle embase (2) une unité de commande pour faire tourner la tige de vanne (16) peut être fixée, laquelle embase de support (2) forme une chambre fermée (9), à l'extérieur de laquelle la tige de vanne (16) peut être commandée, caractérisée en ce qu'un capteur de pression (18) pour mesurer la pression dans la chambre (9) est prévu.

2. Vanne selon la revendication 1, dans laquelle l'embase de support possède une paroi qui est d'un seul tenant avec le logement de vanne (1) et fait le tour complet de la tige de vanne (16), laquelle paroi est obturée par un couvercle (8) du côté opposé au logement de vanne (1).

3. Vanne selon la revendication 2, dans laquelle la paroi est au moins partiellement cylindrique à l'intérieur, et le couvercle (8) est, de manière correspondante, cylindrique à l'extérieur, de telle sorte que le couvercle (8) est monté dans la partie cylindrique, de manière à la rendre étanche.

4. Vanne selon la revendication 3, dans laquelle la tige de vanne (16) est fixée au couvercle (8), à son côté opposé au logement de vanne (1), le couvercle (8) possède des moyens de couplage (12) grâce auxquels il peut être couplé à l'unité de commande, et à sa périphérie porte une bague d'étanchéité (10), de telle sorte que lors de la rotation du couvercle (8), le corps de vanne (4) est tourné de façon correspondante, tandis que l'étanchéité entre le couvercle et la paroi est conservée.

5. Vanne selon la revendication 4, dans laquelle la tige de vanne (16) possède une face d'arrêt qui est opposée au logement de vanne (1) et sur laquelle le couvercle (8) peut être supporté.

6. Vanne selon la revendication 5, dans laquelle un orifice intérieurement taraudé débouche dans la face d'arrêt, dans le lequel orifice un boulon (14) est vissé, reposant avec sa tête du côté du couvercle (8) opposé au logement de vanne (1).

7. Vanne selon la revendication 6, dans laquelle la paroi de chambre est pourvue d'une ouverture (17) qui est obturée au moyen d'un raccord de connexion destiné au capteur de pression.
